# NEUE EUROPÄISCHE PATENTSCHRIFT

(11) **EP 0 677 550 B2**
(45) Veröffentlichungstag und Bekanntmachung des Hinweises auf die Entscheidung über den Einspruch: **23.07.2003**
(45) Hinweis auf die Patenterteilung: 18.08.1999
(21) Anmeldenummer: 95810227.9
(22) Anmeldetag: 06.04.1995
(51) Int. Cl.: C08K 13/02, C08L 27/06

(54) **Stabilisiertes Polyvinylchlorid**
Stabilised polyvinyl chloride
Polychlorure de vinyle stabilisé

(30) Priorität: 15.04.1994 CH 114194
(43) Veröffentlichungstag der Anmeldung: 18.10.1995
(73) Patentinhaber: Crompton Vinyl Additives GmbH, 68623 Lampertheim (DE)
(72) Erfinder: Drewes, Rolf, Dr., D-64678 Lindenfels (DE); Kolb, Markus, D-68723 Plankstadt (DE); Kuhn, Karl Josef, Dr., D-64686 Lautertal (DE); Sander, Hans-Jürgen, D-64653 Lorsch (DE); Wehner, Wolfgang, Dr., D-64372 Ober-Ramstadt (DE)
(74) Vertreter: Wibbelmann, Jobst, Dr., Dipl.-Chem.

(56) Entgegenhaltungen:
- EP-A- 0 522 810
- EP-A- 0 625 546
- EP-A- 0 658 595
- EP-A- 0 668 316
- PATENT ABSTRACTS OF JAPAN Bd. 016, Nr. 406 (C-0978) 27 August 1992 & JP-A-04 136 054 (ASAHI DENKA KOGYO KK) 11 Mai 1992
- DATABASE WPI Section Ch, Week 9347 Derwent Publications Ltd., London, GB; Class A14, AN 93-374696 & JP-A-05 279 533 ( SEKISUI CHEM IND CO LTD) , 26.Oktober 1993
- PATENT ABSTRACTS OF JAPAN Bd. 013, Nr. 595 (C-672) 27 Dezember 1989 & JP-A-01 252 649 (KATSUTA KAKO KK) 09 Oktober 1989
- DATABASE WPI Week 9127, Derwent Publications Ltd., London, GB; Class A14, AN 91-197248 & JP-A-3 122 149 (ADEKA-ARGUS CHEM CO.LTD) 24 Mai 1991 ADEKA-ARGUS CHEM CO. LTD 'Vinyl chloride-based resin composition.'

## Beschreibung

Die Erfindung betrifft durch Epoxidverbindungen, Perchlorate und Antioxidantien stabilisiertes PVC (Polyvinylchlorid), ein Verfahren zu seiner Herstellung und seine Verwendung.

PVC kann durch eine Reihe von Zusatzstoffen stabilisiert werden.
Schwermetallverbindungen von Blei und Cadmium sind dafür besonders gut geeignet, sind jedoch heute aus ökologischen Gründen wegen des Schwermetallgehalts umstritten. (vgl. "Plastics Additives", Herausgeber R. Gächter und H. Müller, Hanser Verlag, 3. Auflage,1990, Seiten 287-295 und Kunststoff Handbuch PVC, Band 1 und 2, Beck/Braun, Carl Hanser Verlag).

Man sucht daher weiter nach wirksamen Stabilisatoren und Stabilisatorkombinationen.

Epoxidverbindungen sind als Costabilisatoren für PVC schon seit langem bekannt. Man verwendet häufig epoxidiertes Sojabohnenöl (vgl. beispielsweise "Plastics Additives", Herausgeber R. Gächter und H. Müller, Hanser Verlag, 3. Auflage, 1990, Seiten 303/4 und US 3,928,267). Für chloriertes Polyvinylchlorid wird auch der Einsatz von Glycidyleth em von Novolakharzen als Stabilisator beschrieben, beispielsweise in der DE 34 02 408.

In der japanischen Offenlegungsschrift JP Hei 3-122149 wird eine Hart-PVC-Zusammensetzung beschrieben, die zur Verbesserung der durch flüssige Epoxide und Perchlorat erreichbaren Stabilisierung eine Kombination von festen Epoxiden und Perchlorat enthält.

Es wurde nun gefunden, daß mit einer Mischung aus einem Perchlorat, einem endständigen Epoxid und zusätzlich einem Antioxidans stabilisiertes PVC eine hervorragende thermische Stabilität bei guter Anfangsfarbe und Farbhaltung aufweist. Überraschenderweise erfüllt das erfindungsgemäß stabilisierte PVC die hohen Anforderungen, die z.B. von mit Barium/Zink-Verbindungen stabilisiertem PVC erfüllt werden. Besonders hervorzuheben ist, daß ausgezeichnete Lagerstabilität und Lichtstabilität erzielt wird. Femer ist unabhängig vom Aggregatzustand des Epoxids eine gute Stabilisierung zu erzielen, d.h. es können auch flüssige Epoxide ohne Nachteil eingesetzt werden.

Gegenstand der Erfindung ist eine Zusammensetzung enthaltend
(a) PVC,
(b) 0,001-5,0 Teile je 100 Teile PVC Perchlorat der Formel M(ClO₄)ₙ, wobei M H, NH4, Na, K, Mg, Ca, Ba oder Al und n 1, 2 oder 3 je nach Wertigkeit von M ist,
(c) 0,1-50 Teile je 100 Teile PVC einer Epoxidverbindung enthaltend einen endständigen Epoxidrest der Formel I 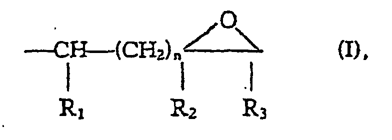 wobei
   R₁ und R₃ Wasserstoff sind,
   R₂ Wasserstoff oder Methyl und n gleich 0 ist, oder
   R₁ und R₃ zusammen -CH₂-CH₂- oder -CH₂-CH₂-CH₂- und R₂ Wasserstoff sind und n 0 oder 1 ist und dieser Rest (I) direkt an ein Sauerstoffatom gebunden ist, wobei die Epoxidverbindung c) ein flüssiger Bisphenol-A-diglycidylether, flüssiger Bisphenyol-F-diglycidylether, flüssiger Polyglycidylether von Phenolformaldehyd, flüssiger Polyglycidylether von o-Cresolformaldehyd, flüssiger Glycidylether von Alkoholen, oder flüssiger Glycidylether von Carbonsäuren ist, und
(d) 0.01-10,0 Teile je 100 Teile PVC eines phenolischen Antioxidans.

Ein weiterer Gegenstand der Erfindung sind Zusammensetzungen enthaltend als Komponente (c) eine Epoxyverbindung, die eine aromatische Gruppe enthält, insbesondere ein Bisphenolderivat.

Ein weiterer Gegenstand der Erfindung sind Zusammensetzungen enthaltend zusätzlich Stofie ausgewählt aus der Gruppe der Metallseifen, Weichmacher, Füllstoffe und Verstärkungsmittel, weiteren Antioxidantien, Polyole, Zeolithe, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, Naphtole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

Ein weiterer Gegenstand der Erfindung ist ein Verfahren zur Herstellung von stabilisiertem P.CV, welches dadurch gekennzeichnet ist, daß man unter Verwendung von Vorrichtungen, wie Kalander, Mischer, Kneter, Extruder und dergleichen, die Komponenten (b) (c) und (d) gemäß Anspruch 1 und gegebenenfalls weitere Zusätze mit dem PVC vermischt.

Weitere Gegenstände werden durch die Ansprüche gekennzeichnet.

Die Zusammensetzung enthält vorzugsweise keine Blei- oder Cadmiumverbindungen.

Die Komponente (a) ist als PVC im weiteren Sinn zu verstehen, d.h. sie umfaßt auch Blends, Copolymerisate, oder Pfropfpolymerisate von PVC mit polymerisierbaren Verbindungen bzw. (Co-)Polymerisaten wie ABS, wobei es sich um Suspensions-, Masse- oder Emulsionspolymerisate und deren Abmischungen handeln kann. Bevorzugt ist PVC als Suspensions-, Emulsions- und Massepolymerisat auch in Kombination mit Polyacrylaten.

Geeignet als Komponente (a) für die erfindungsgemäßen Zusamensetzungen sind somit auch beispielsweise Zusammensetzungen aus (i) 20-80 Gew.-Teilen eines Vinylchlorid-Homopolymeren (PVC) und (ii) 80-20 Gew.-Teile mindestens eines thermoplastischen Copolymerisats auf der Basis von Styrol und Acrylnitril, insbesondere aus der Gruppe ABS, NBR, NAR, SAN und EVA. Die verwendeten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitrit-Butadien; NAR: Acrylnitril-Acrylat; EVA: Ethylen-Vinylacetat. Es kommen auch Styrol-Acrylnitril-Copolymerisate auf Acrylat-Basis (ASA) in Betracht. Bevorzugt als Komponente (a) im weiteren Sinn sind Polymerzusammensetzungen, die als Komponenten (i) und (ii) eine Mischung aus 25-75 Gew.-% PVC und 75-25 Gew.-% der genannten Copolymerisate enthalten. Beispiele für solche Zusammensetzungen sind: 25-50 Gew.-% PVC und 75-50 Gew.-% Copolymerisate bzw. 40-75 Gew.-% PVC und 60-25 Gew.-% Copolymerisate. Bevorzugte Copolymerisate sind ABS, SAN und modifiziertes EVA, insbesondere ABS. Besonders geeignet sind auch NBR, NAR und EVA. In der erfindungsgemäßen Zusammensetzung können eines oder mehrere der genannten Copolymerisate vorhanden sein. Von besonderer Bedeutung sind als Komponente (a) im weiteren Sinn Zusammensetzungen, die (i) 100 Gewichtsteile PVC, und (ii) 0-300 Gewichtsteile ABS und/oder mit SAN modifiziertes ABS und 0-80 Gewichtsteile der Copolymeren NBR, NAR und/oder EVA, insbesondere jedoch EVA, sowie auf 100 Gewichtsteile (i) und (ii) 0-120 Gewichtsteile Weichmacher, insbesondere Phthalsäureester wie DOP, DINP, DIDP und/oder Trimellithsäureester wie TOTM, TIDTM, TITDTM [Vgl. weiter unten unter Weichmacher, A) und C)], enthalten.

Zweckmäßig ist eine Zusammensetzung, wie oben beschrieben, enthaltend als Komponente (b) mindestens ein Perchlorat der Formel M(ClO₄)ₙ wobei M für H⁺, NH₄⁺, Na⁺, K⁺, Mg²⁺, Ca²⁺, Ba²⁺ oder Al³⁺ steht. Der Index n ist entsprechend der Wertigkeit von M 1, 2 oder 3.

Die Perchlorsäure oder das jeweilige Perchlorat können dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder eingebunden durch chemische Reaktion in einen Hydrotalcit.

Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewendet werden.

### Epoxidverbindungen

Geeignete endständige Epoxide sind beispielsweise:
a) flüssige Bisphenol-A-diglycidylether wie Araldit®GY 240, Araldit®GY 250, Araldit®GY 260, Araldit®GY 266, Araldit®GY 2600, Araldit®MY 790;
b) flüssige Bisphenol-F-diglycidylether wie Araldit®GY 281, Araldit®PY 302, Araldit®PY 306;
c) flüssige Polyglycidylether von Phenolformaldehyd Novolak wie EPN 1138, EPN 1139, GY 1180, PY 307;
d) flüssige Polyglycidylether von o-Cresolformaldehyd Novolak wie ECN 1235, ECN 1273, ECN 1280, ECN 1299;
e) flüssige Glycidylether von Alkoholen wie Shell® Glycidylether 162, Araldit®DY 0390, Araldit®DY 0391;
f) flüssige Glycidylether von Carbonsäuren wie Shell®Cardura E Terephthalsäureester, Trimellithsäureester, Araldit®PY 284;

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Antioxidantien:

Bevorzugte Antioxidantien (d) enthalten phenolische Gruppen.

Bevorzugt entsprechen diese der Formel II, 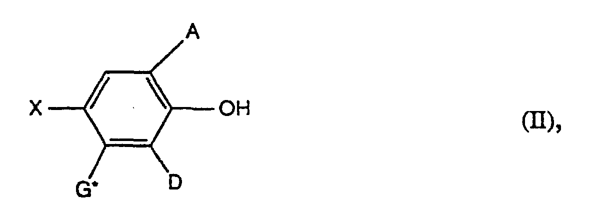 worin
- A: Wasserstoff, C₁-C₂₄-Alkyl, C₅-C₁₂-Cycloalkyl, Phenyl-C₁-C₄-alkyl, Phenyl oder eine Gruppe -CH₂-S-R'₁ oder 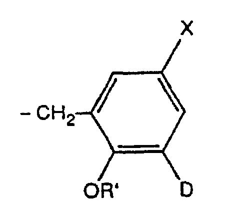 bedeutet,
- D: C₁-C₂₄-Alkyl, C₅-C₁₂-Cycloalkyl, Phenyl-C₁-C₄-alkyl, Phenyl oder eine Gruppe -CH₃-S-R'₁ bedeutet,
- X: Wasserstoff, C₁-C₁₈-Alkyl oder eine der Gruppen -CₐH₂ₐ-S_{q}-R'₂,-C_{b}H_{2b}-CO-OR'₃, -C_{b}H_{2b}-CO-N (R'₅)(R'₆), -CH₂N(R'₁₀)(R'₁₁), 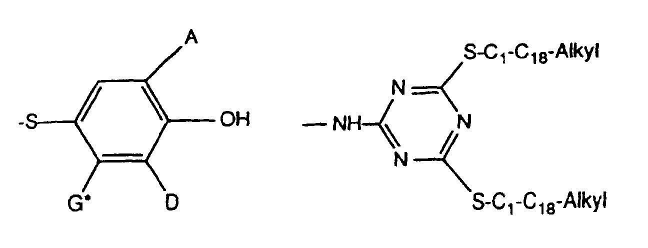 oder 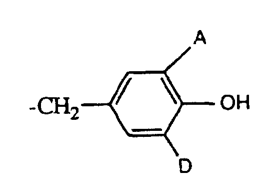 ist,
- R': Wasserstoff oder eine Gruppe der Formel -CO-CH=CH₂ ist,
- G*: für Wasserstoff oder C₁-C₁₂-Alkyl steht,
- R'₁: C₁-C₁₈-Alkyl, Phenyl oder eine Gruppe -(CH₂)_{c}-CO-OR'₄ oder -CH₂CH₂OR'₉ bedeutet.
- R'₂: Wasserstoff, C₁-C₁₈-Alkyl, Phenyl, Benzyl oder eine Gruppe 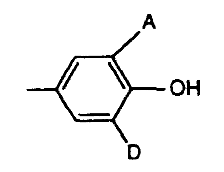 oder -(CH₂)_{c}-CO-OR'₄ oder -CH₂-CH₂-OR'₉ bedeutet,
- R₃: C₁-C₃₀-Alkyl oder eine der Gruppen -CHR'₇-CH₂-S-R'₈, 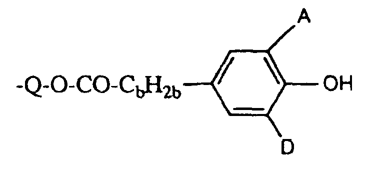 oder 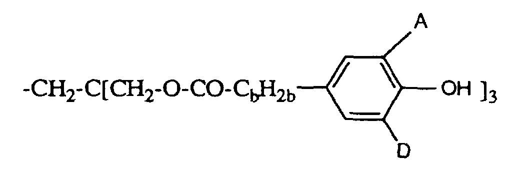 bedeutet, worin Q C₂-C₈-Alkylen, C₄-C₆-Thiaalkylen oder eine Gruppe -CH₂CH₂(OCH₂CH₂)_{d}-ist,
- R'₄: C₁-C₂₄-Alkyl bedeutet,
- R'₅: Wasserstoff, C₁-C₁₈-Alkyl oder Cyclohexyl bedeutet,
- R'₆: C₁-C₁₈-Alkyl, Cyclohexyl, Phenyl, durch C₁-C₁₈-Alkyl substituiertes Phenyl oder eine der Gruppen 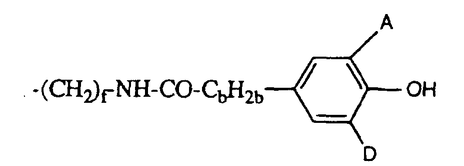 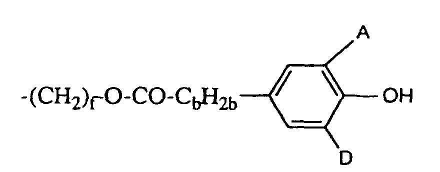 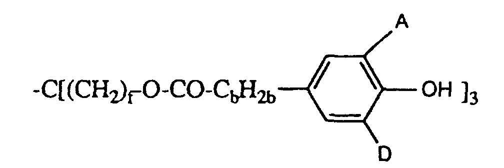 bedeutet, oder R'₅ und R'₆ zusammen C₄-C₈-Alkylen, das durch -O- oder -NH- unterbrochen sein kann, bedeuten,
- R'₇: Wasserstoff, C₁-C₄-Alkyl oder Phenyl bedeutet,
- R'₈: C₁-C₁₈-Alkyl bedeutet,
- R'₉: Wasserstoff, C₁-C₂₄-Alkyl, Phenyl, C₂-C₁₈-Alkanoyl oder Benzoyl bedeutet,
- R'₁₀: C₁-C₁₈-Alkyl, Cyclohexyl, Phenyl, durch C₁-C₁₈-Alkyl substituiertes Phenyl oder eine Gruppe 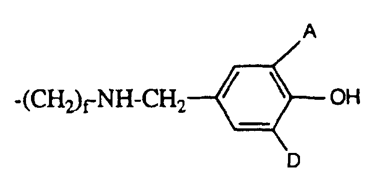 bedeutet
- R'₁₁: Wasserstoff, C₁-C₁₈-Alkyl, Cyclohexyl, oder eine Gruppe 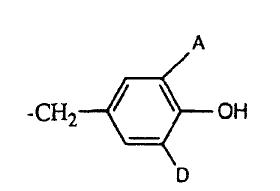 ist, oder
- R'₁₀ und R'₁₁: zusammen C₄-C₈-Alkylen, das durch -O- oder -NH-unterbrochen sein kann, bedeuten
- a: 0, 1, 2 oder 3 ist, b 0, 1, 2 oder 3 ist, c 1 oder 2 ist, d 1 bis 5 ist, f 2 bis 8 ist und q 1, 2, 3 oder 4 ist.

Bevorzugt ist eine phenolische Verbindung Formel II, worin
- A: Wasserstoff, C₁-C₈-Alkyl, Cyclohexyl, Phenyl oder eine Gruppe -CH₂-S-C₁-C₁₈-Alkyl oder 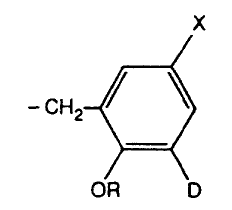 bedeutet,
- D: C₁-C₈-Alkyl, Cyclohexyl, Phenyl oder eine Gruppe -CH₂-S-C₁-C₁₈-Alkyl bedeutet,
- X: Wasserstoff, C₁-C₈-Alkyl oder eine der Gruppen -CₐH₂ₐ-S_{q}-R'₂, -C_{b}H_{2b}-CO-OR'₃, -CH₂N(R'₁₀) (R'₁₁), 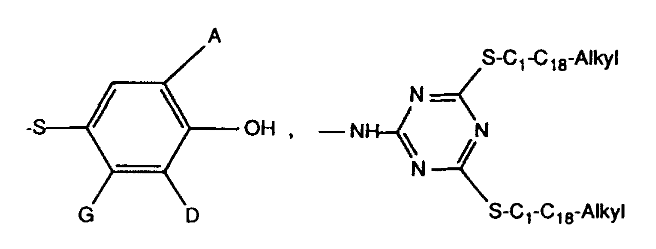 oder 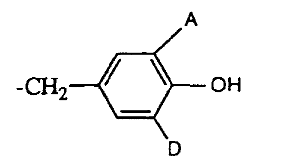 ist,
- R'₂: C₁-C₁₂-Alkyl, Phenyl oder eine Gruppe -(CH₂)_{c}-CO-OR'₄ bedeutet,
- R'₃: C₁-C₁₈-Alkyl oder eine Gruppe 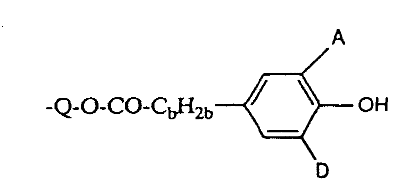 bedeutet, worin Q C₂-C₈-Alkylen, -CH₂-CH₂-S-CH₂CH₂ oder eine Gruppe -CH₂CH₂(OCH₂CH₂)_{d}- ist,
- R'₄: C₁-C₁₈-Alkyl bedeutet,
- R'₁₀ und R'₁₁: unabhängig voneinander Wasserstoff oder C₁-C₁₂-Alkyl sind oder
- R'₁₀ und R'₁₁: zusammen C₄-C₈-Alkylen, das durch -O- oder -NH-unterbrochen sein kann, bedeuten
- a: 1 oder 2 ist, b 1 oder 2 ist, c 1 oder 2 ist und d 1, 2 oder 3 ist.

Besonders bevorzugt sind Verbindungen, die mindestens eine Gruppe der Formel 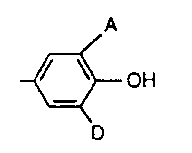 enthalten, worin A Wasserstoff, Methyl oder tert-Butyl und D gegebenenfalls substituiertes Alkyl oder gegebenenfalls substituiertes Alkylthioalkyl ist

Beispielhaft für Antioxidantien seien genannt:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol,2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl) butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di-[4-(1,1,3,3-tetramethylbutyl)-phenyl]-22-bis-(35-di-tert-butyl-4-hydroxybenzyl)-malonat.
8. Hydroxybenzyl-Aromaten z.B. 1,3,5-Tris-(35-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethylesters, Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, (C₉H₁₉-C₆H₄-O)_{1,5}-P-(O-C₁₂₋₁₃H₂₅₋₂₇)_{1,5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit,Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)-ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin

Davon sind bevorzugt die Antioxidantien der Gruppen 1-5, 10 und 12, insbesondere 2,2-Bis-(4-hydroxyphenyl)-propan und die Ester der 3,5-Di-tert-butyl-4-hydroxyphenylpropionsäure mit Octadecanol oder Pentaerythrit, oder Tris-(2,4-di-tert-butylphenyl)-phosphit.

Gegebenenfalls kann auch ein Gemisch von verschiedenen Antioxidantien eingesetzt werden.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile PVC, angewendet werden.

Das erfindungsgemäß stabilisierte PVC kann weitere Additive enthalten. Es handelt sich beispielsweise um Weichmacher, Metallseifen, Füllstoffe und Verstärkungsmittel (wie beispielsweise Calciumcarbonat, Silikate, Glasfasern, Talk, Kaolin, Kreide, Glimmer, Metalloxide und -hydroxide, Ruß oder Graphit), Polyole, Zeolithe, Dawsonite, Hydrotalcite, organische Phosphite, 1,3-Diketoverbindungen, Dihydropyridine, α-Phenylindol, Pyrrole, β-Naphthol, Hydroxydiphenylamine, sterisch gehinderte Amine (HALS), Lichtschutzmittel, UV-Absorber, Gleitmittel, Fettsäureester Paraffine, Treibmittel, optische Aufheller, Pigmente, Flammschutzmittel, Antistatika, β-Aminocrotonate (z.B. wie in EP 0 465 405, S. 6, Z. 9-14 erwähnt), Phosphate, Thiophosphate, Gelierhilfen, peroxidzerstörende Verbindungen, Modifikatoren und weitere Komplexbildner für Lewis-Säuren.

### Füllstoffe

Als Füllstoffe werden z.B. Kreide, Kaolin, China-Clay, Talk, Silikate, Glasfasern, Glaskugeln, Holzmehl, Glimmer, Metalloxide, Metallhydroxide, Ruß, Graphit, Gesteinsmehl, und Schwerspat verwendet. Bevorzugt sind Kreide und Talk.

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

Als organische Weichmacher kommen beispielsweise solche aus den folgenden Gruppen in Betracht:
A) Phthalate (Phthalsäureester)
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat. **Gebräuchliche Abkürzungen sind** DOP (Dioctylphthalat, Di-2-ethylhexyl-phthalat), DINP (Diisononylphthalat), DIDP (Diisodecylphthalat).
B) Ester aliphatischer Dicarbonsäuren, insbesondere Ester von Adipin-, Azelain- und Sebazinsäure
   Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester,
   beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. **Gebräuchliche Abkürzungen sind** TOTM (Trioctyltrimellitat, Tri-2-ethylhexyl-trimellitat), TIDTM (Triisodecyltrimellitat) **und** TITDTM (Triisotridecyltrimellitat).
D) Epoxyweichmacher
   In der Hauptsache sind das epoxidierte ungesättigte Fettsäuren wie z.B. epoxidiertes Sojabohnenöl.
E) Polymerweichmacher
   Eine Definition dieser Weichmacher und Beispiele für solche sind im Handbuch "Plastics Additives", Herausgeber R. Gächter und H. Müller, Hanser Publishers, 1985, Seite 393, Kapitel 5.9.6, sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure: Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und C₉-C₁₁-Alkanolgemische. Besonders vorteilhaft sind Polyesterweichmacher aus den genannten Dicarbonsäuren und monofunktionellen Alkoholen.
F) Phosphorsäureester
   Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie ®Reofos 50 und 95.
G) Chlorierte Kohlenwasserstoffe (Paraffine)
H) Kohlenwasserstoffe
I) Monoester, z.B. Butyloleat, Phenoxyethyloleat, Tetrahydrofurfuryloleat und Alkylsulfonsäureester.
J) Glykolester, z.B. Diglykolbenzoate.

Definitionen und Beispiele für Weichmacher der Gruppen G) bis J) sind den folgenden Handbüchern zu entnehmen:

"Plastics Additives", Herausgeber R. Gächter und H. Müller, Hanser Publishers, 1985, Kapitel 5.9.14.2 (Gruppe G)), und Kapitel 5.9.14.1 (Gruppe H)).

"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis G), insbesondere A) bis F), vor allem die in diesen Gruppen als bevorzugt herausgestellten Weichmacher.

Im allgemeinen sind von den Weichmachern der Gruppen A), B), C) und E) 5 bis 120, besonders 10 bis 100 Teile,
von denen der Gruppe D) 0,5 bis 30, besonders 0,5 bis 20 Teile,
und von denen der Gruppen F) bzw. G) 1 bis 100, besonders 2 bis 80 Teile vorhanden.

Es können auch Mischungen unterschiedlicher Weichmacher verwendet werden.

Die Weichmacher können in einer Menge von beispielsweise 5 bis 120, zweckmäßig 10 bis 100 und insbesondere 20 bis 70 Gew.-Teilen, bezogen auf 100 Gew.-Teile PVC, angewendet werden.

### Metallseifen

Metallseifen sind in der Hauptsache Metallcarboxylate bevorzugt längerkettiger Carbonsäuren. Geläufige Beispiele sind Stearate und Laureate, auch Oleate und Salze kürzerkettiger Alkylcarbonsäuren. Als Metallseifen sollen auch Alkylbenzoesäuren gelten. Oft verwendet man sog. synergistische Mischungen wie Barium/Zink, Magnesium/Zink oder Calcium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry 5th Ed. Vol. A16 (1985) S361 ff)

Zweckmäßig verwendet man organische Metallseifen aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate, Tallate und Rosinate.

Namentlich zu erwähnen sind, als Beispiele, die Zink-, Calcium-, Magnesium- oder Bariumsalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Calcium-, Magnesium- und Zinksalze der Monoester der divalenten Carbonsäuren, wie Oxalsäure, Malonsäure, Bernsteinsäure, Glutarsäure, Adipinsäure, Fumarsäure, Pentan- 1,5-dicarbonsäure, Hexan-1,6-dicarbonsäure, Heptan- 1 ,7-dicarbonsäure, Octan- 1 ,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure.
Bevorzugt sind Calcium-, Magnesium- und Zink-Carboxylate von Carbonsäuren mit 7 bis 18 C-Atomen (Metallseifen im engeren Sinn), wie beispielsweise Benzoate oder Alkanoate, bevorzugt Stearat, Oleat, Laurat, Palmitat, Behenat, Hydroxystearate, Dihydroxystearate oder 2-Ethylhexanoat. Besonders bevorzugt sind Stearat, Oleat und p-tert-Butylbenzoat. Auch überbasische Carboxylate wie überbasisches Zinkoctoat sind bevorzugt.

Gegebenenfalls kann auch ein Gemisch von Carboxylaten unterschiedlicher Struktur eingesetzt werden.

Bevorzugt sind Zusammensetzungen, wie beschrieben, enthaltend eine organische Zinkoder/und Calciumverbindung.,

Neben den genannten Verbindungen kommen auch organische Aluminium-Verbindungen in Frage, insbesondere Verbindungen analog den oben erwähnten. Zu den verwendbaren und bevorzugten Aluminium-Verbindungen finden sich weitere Erläuterungen in US 4,060,512 und US 3,243,394

Neben den bereits genannten Verbindungen kommen ferner auch organische Seltenerd-Verbindungen, insbesondere Verbindungen analog den oben erwähnten, in Frage. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023.

Gegebenenfalls kann ein Gemisch von Zink-, Erdalkali-, Aluminium-, Lanthan- oder Lanthanoid-Verbindung unterschiedlicher Struktur eingesetzt werden. Auch können organische Zink-, Aluminium-, Lanthan- oder Lanthanoid-Verbindungen auf eine Alumosalz-Verbindung gecoatet sein; siehe hierzu auch DE-A-40 31 818.

Die Metallseifen bzw. deren Mischungen können in einer Menge von beispielsweise 0,001 bis 10, zweckmäßig 0,01 bis 8, besonders bevorzugt 0,05 bis 5 Gew.-Teilen, bezogen auf 100 Gew.-Teile PVC, angewendet werden. Gleiches gilt für die weiteren Metallstabilisatroen:

### Weitere Metallstabilisatoren

Hier sind vor allem die Organozinnstabilisatoren zu nennen. Insbesondere kann es sich um Carboxylate, Mercaptide und Sulfide handeln. Geeignete Verbindungen sind in US 4,743,640 beschrieben (Sp. 3-5).

### β-Diketone

Verwendbare 1,3-Dicarbonylverbindungen können lineare oder cyclische Dicarbonylverbindungen sein. Bevorzugt werden Dicarbonylverbindungen der Formel verwendet, 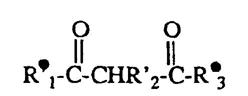 worin R_{●1}, C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl C₅-C₁₂-Cycloalkyl, durch C₁-C₄-Alkyl substituiertes C₅-C₁₂-Cycloalkyl oder eine Gruppe -R_{_{●}5}-S-R_{_{●}6} oder-R_{_{●}5}-O-R_{_{●}6} bedeutet, R_{_{●}2} Wasserstoff, C₁-C₈-Alkyl, C₂-C₁₂-Alkenyl, Phenyl, C₇-C₁₂-Alkylphenyl, C₇-C₁₀-Phenylalkyl oder eine Grupe -CO-R_{_{●}4} bedeutet, R_{_{●}3} eine der für R_{_{●}1} gegebenen Bedeutungen hat oder C₁-C₁₈-Alkoxy bedeutet, R_{_{●}4} C₁-C₄-Alkyl oder Phenyl bedeutet,
R_{_{●}5} C₁-C₁₀-Alkylen bedeutet und R_{_{●}6} C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone der EP-A-346 279 und die Oxa- und Thia-diketone der EP-A-307 358 ebenso wie die auf Isocyansäure basierenden Diketone der US 4,339,383.

R●₁ und R●₃ als Alkyl können insbesondere C₁-C₁₈-Alkyl sein, wie z.B. Methyl, Ethyl, n-Propyl, Isopropyl, n-Butyl, tert. Butyl, Pentyl, Hexyl, Heptyl, Octyl, Decyl, Dodecyl oder Octadecyl.

R●₁ und R●₃ als Hydroxyalkyl stellen insbesondere eine Gruppe -(CH₂)ₙ-OH dar, worin n 5, 6 oder 7 ist.

R●₁ und R●₃ als Alkenyl können beispielsweise Vinyl, Allyl, Methallyl, 1-Butenyl, 1-Hexenyl oder Oleyl bedeuten, vorzugsweise Allyl.

R●₁ und R●₃ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

R●₁ und R●₃ als Phenylalkyl sind insbesondere Benzyl. R_{●2} und R_{●3} als Cycloalkyl oder Alkyl-cycloalkyl sind insbesondere Cyclohexyl oder Methylcyclohexyl.

R●₂ als Alkyl kann insbesondere C₁-C₄-Alkyl sein. R●₂ als C₂-C₁₂-Alkenyl kann insbesondere Allyl sein. R●₂ als Alkylphenyl kann insbesondere Tolyl sein. R●₂ als Phenylalkyl kann insbesondere Benzyl sein. Vorzugsweise ist R●₂ Wasserstoff. R●₃ als Alkoxy kann z.B. Methoxy, Ethoxy, Butoxy, Hexyloxy, Octyloxy, Dodecyloxy, Tridecyloxy, Tetradecyloxy oder Octadecyloxy sein. R●₅ als C₁-C₁₀-Alkylen ist insbesondere C₂-C₄-Alkylen R●₆ als Alkyl ist insbesondere C₄-C₁₂-Alkyl, wie z.B. Butyl, Hexyl, Octyl, Decyl oder Dodecyl. R●₆ als Alkylphenyl ist insbesondere Tolyl. R●₆ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, 7 -tert.Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan Bis (2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester und Dehydracetsäure sowie deren Zink- oder Magnesiumsalze.

Bevorzugt sind 1,3-Diketoverbindungen der obigen Formel, worin R●₁ C₁-C₁₈-Alkyl, Phenyl, durch OH, Methyl oder Methoxy substituiertes Phenyl, C₇-C₁₀-Phenylalkyl oder Cyclohexyl ist, R●₂ Wasserstoff ist und R●₃ eine der für R●₁ gegebenen Bedeutungen hat.

Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewendet werden.

Als UV-Absorber und Lichtschutzmittel kommen beispielsweise in Betracht:
1. 2-(2'-Hydroxyphenyl)-benztriazole, wie z.B. 2-(2'-Hydroxy-5'-methylphenyl)-benztriazol, azol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl-2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2-hydroxy-5'-(2-methoxycarbonylethyl)phenyl)-5-chlor-benztriazol, 2-(3-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)-phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300: 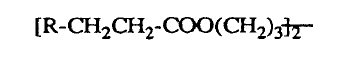 mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat n-Butyl-3,5-di-tert-butyl-4-hydroxybenzyl-malonsäure-bis(1,2,2,6,6-pentamethylpiperidyl)-ester, Kondensationsprodukt aus 1 -Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht:
Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat oder Ethylenglykolbismercaptoacetat.

Als Gleitmittel kommen beispielsweise in Betracht:
Montanwachs, Fettsäureester, PE-Wachse, Amidwachse, Chlorparaffine, Glycerinester oder Erdalkaliseifen. Verwendbare Gleitmittel sind auch in "Plastics Additives", Herausgeber R. Gächter und H. Müller, Hanser Verlag, 3. Auflage, 1990, Seiten 466-470 beschrieben. Für die Verwendung von Calciumseifen gilt, daß diese in für Gleitmittel üblichen Mengen, bevorzugt kleiner 0,3 Teile, besonders bevorzugt kleiner 0,2 Teile je 100 Teile PVC, eingesetzt werden. Bevorzugt ist stabilisiertes PVC ohne Calciumseifen.

Als weitere metallfreie Stabilisatoren kommen beispielsweise β-Naphthol, β-Aminocrotonate (z.B. wie in EP 0 465 405, S. 6, Z. 9-14 erwähnt), Pyrrole, wie z.B. in EP-A-465405 beschrieben sowie Hydroxydiphenylamine in Betracht.

Als Polyole kommen beispielsweise in Betracht:
Pentaerythrit, Dipentaerythrit, Tripentaerythrit, Bistrimethylolpropan, Bistrimethylolethan, Trismethylolpropan, Sorbit, Maltit, Isomaltit, Lactit, Lycasin, Mannit, Lactose, Leucrose, Tris-(hydroxyethyl)-isocyanurat, Palatinit, Tetramethylolcyclohexanol, Tetramethylolcyclopentanol, Tetramethylolcyclopyranol, Glycerin, Diglycerin, Polyglycerin oder 1-0-α-D-Glycopyranosyl-D-mannit-dihydrat. Bevorzugt sind davon die Disaccharidalkohole.

Die Polyole können in einer Menge von beispielsweise 0,01 bis 20, zweckmäßig 0,1 bis 20 und insbesondere 0,1 bis 10 Gew.-Teilen, bezogen auf 100 Gew.-Teile PVC, angewendet werden.

Es kommen organische Phosphite der allgemeinen Formel P(OR)₃ in Betracht, wobei die Reste R gleiche oder verschiedene Alkyl-, Alkenyl-, Aryl- oder Aralkyl-Reste bedeuten. Bevorzugte organische Phosphite sind solche der Formeln 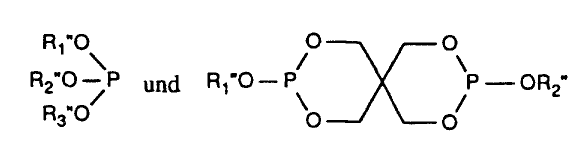 worin R₁", R₂" und R₃" gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R₁", R₂" und R₃" C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R₁", R₂" und R₃" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit, sowie nichtstöchiometrische Triarylphosphite. z.B. der Zusammensetzung (H₁₉C₉-C₆H₄)O_{1,5}P(OC_{12,13}H_{25,27})_{1,5}. Bevorzugte organische Phosphite sind Distearyl-pentaerythrit-diphosphit, Trisnonylphenylphosphit und Phenyl-didecyl-phosphit.

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Als Verbindungen aus der Reihe der Hydrotalcite oder Zeolithe kommen sowohl die natürlich vorkommenden Mineralien wie auch synthetisch hergestellte Verbindungen in Betracht. Die zusätzliche Verwendung von Hydrotalciten oder/und Zeolithen in den erfindungsgemäßen Zusammensetzungen ist bevorzugt, da diese Verbindungen die Stabilisierung synergistisch verstärken können.

Verbindungen aus der Reihe der Hydrotalcite können durch die allgemeine Formel I,

M²⁺₁₋ₓ•M³⁺ₓ•(OH)₂•(Aⁿ⁻)_{x_{/n}}•mH₂O (I)

beschrieben werden,
wobei
- M²⁺: = Mg, Ca, Sr, Zn, Sn und/oder Ni ist,
- M³⁺: = Al, B oder Bi ist,
- An: ein Anion mit der Valenz n darstellt,
- n: eine Zahl von 1-4 ist,
- x: eine Zahl von 0-0,5 ist,
- m: eine Zahl von 0-2 ist.

Bevorzugt ist
- Aⁿ: = OH-, Cl-, Br, I⁻, ClO₄⁻, HCO₃⁻, CH₃COO⁻, C₆H₅COO⁻, CO₃²⁻, SO₄²⁻, 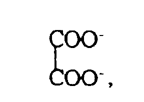 (CHOHCOO)₂²⁻, (CHOH)₄CH₂OHCOO⁻, C₂H₄(COO)₂²⁻, (CH₂COO)₂²⁻, CH₃CHOHCOO⁻, SiO₃²⁻, SiO₄⁴⁻, Fe (CN)₆³⁻, Fe(CN)₆⁴⁻ oder HPO₄²⁻ darstellt:
weitere Beispiele finden sich in DE 41 06 403.

Andere Hydrotalcite, die zweckmäßig eingesetzt werden können, sind Verbindungen mit der allgemeinen Formel la,

M²⁺ₓAl₂(OH)_{2x+6nz}(Aⁿ⁻)₂•mH₂O (Ia)

wobei in vorliegender Formel la M²⁺ wenigstens ein Metall aus der Reihe von Mg und Zn darstellt und Mg bevorzugt ist, Aⁿ⁻ ein Anion, beispielsweise aus der Reihe von CO₃²⁻, 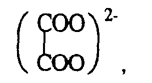 OH- und S²⁻ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel I,

M²⁺₁₋ₓ•M³⁺ₓ•(OH)₂•(Aⁿ⁻)_{x_{/n}} •mH₂O (I)

wobei M²⁺ die Bedeutung von Mg oder einer festen Lösung von Mg und Zn hat, Aⁿ⁻ für CO₃²⁻ steht, x eine Zahl von 0 bis 0,5 ist und m eine Zahl von 0 bis 2 ist.

Ganz besonders bevorzugt sind Hydrotalcite der Formeln

Al₂O₃·6MgO·CO₂·12H₂O,

Mg_{4,5}Al₂(OH)₁₃·CO₃·3,5H₂O,

4MgO·Al₂O₃·CO₂·9H₂O,

4MgO·Al₂O₃·CO₂·6H₂O,

ZnO·3MgO·Al₂O₃·CO₂·8-9H₂O

oder

ZnO·3MgO·Al₂O₃·CO₂·5-6H₂O.

Die Hydrotalcite können in einer Menge von beispielsweise 0,1 bis 20, zweckmäßig 0,1 bis 10 und insbesondere 0,1 bis 5 Gew.-Teilen, bezogen auf 100 Gew.-Teile PVC, angewendet werden.

Zeolithe können durch die allgemeine Formel (X)

M_{x/n}[(AlO₂)ₓ(SiO₂)_{y}]·wH₂O (X)

wobei n die Ladung des Kations M,
M ein Element der ersten oder zweiten Hauptgruppe, sowie Zink,
y : x eine Zahl zwischen 0,8 und unendlich, vorzugsweise zwischen 0,8 und 10,5 und
w eine Zahl zwischen 0 und 300 ist,
beschrieben werden.

Weiter sind erfindungsgemäß verwendbare Zeolithe aus "Atlas of Zeolite Structure Types", W.M. Meier und D.H. Olson, Verlag Butterworths, 3. Auflage 1992 bekannt.

Zu Zeolithen im weiteren Sinne sind auch Aluminiumphosphate mit Zeolithstruktur zu rechnen.

Die bevorzugten an sich bekannten Zeolithe weisen einen durchschnittlichen wirksamen Porendurchmesser von 3-5 Ä auf und können nach bekannten Methoden hergestellt werden. Besonders bevorzugt sind Zeolithe vom Typ NaA, die einen durchschnittlichen wirksamen Porendurchmesser von 4 Å besitzen, weshalb sie auch als Zeolithe 4A bezeichnet werden.

Besonders bevorzugt sind kristalline Natriumalumosilikate, deren Teilchengrösse wenigstens weitaus überwiegend im Bereich von 1-10 µ liegt.

In einer bevorzugten Ausführung der Erfindung können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich

2,5 - 6,0 Na₂O.Al₂O₃ : 0,5 - 5,0 SiO₂ . 60 - 200 H₂O

liegt. Dieser Ansatz wird in üblicher Weise zur Kristallisation gebracht. Dies geschieht vorteilhafterweise dadurch, daß man den Ansatz wenigstens 1/2 Stunde lang auf 70-120°C, vorzugsweise auf 80-95°C unter Rühren erwärmt. Das kristalline Produkt wird auf einfache Weise durch Abtrennen erhalten, nachgewaschen und dann getrocknet.

Im Rahmen der Erfindung lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200°C erhitzt. Aus der Vielzahl brauchbarer Dispergiermittel sind als Beispiele Natriumlaurylethersulfat, Natriumpolyacrylat und das Natriumsalz der 1-Hydroxyethan-1,1-diphosphonsäure zu nennen.

Bevorzugt ist stabilisiertes PVC, wie oben beschrieben, enthaltend mindestens eine der Verbindungen der Formeln

Na₁₂Al₁₂Si₁₂O₄₈·27 H₂O [Zeolith A],

Na₆Al₆Si₆O₂₄·2 NaX·7,5 H₂O, X= OH, Halogen, ClO₄ [Sodalith]

Na₆Al₆Si₃₀O₇₂ · 24 H₂O,

Na₈Al₈Si₄₀O₉₆ · 24 H₂O,

Na₁₆Al₁₆Si₂₄O₈₀ · 16 H₂O,

Na₁₆Al₁₆Si₃₂O₉₆ · 16 H₂O,

Na₅₆Al₅₆Si₁₃₆O₃₈₄ · 250 H₂O, [Zeolith Y]

Na₈₆Al₈₆Si₁₀₆O₃₈₄ · 264 H₂O [Zeolith X]

oder die durch teilweisen bzw. vollständigen Austausch der Na-Atome durch Li-, K-, Mg-, Ca-, Sr- oder Zn-Atome darstellbaren Zeolithe wie

(Na,K)₁₀Al₁₀Si₂₂O₆₄ ·20 H₂O.

Ca_{4.5}Na₃[(AlO₂)₁₂(SiO₂)₁₂]·30 H₂O

K₉Na₃[(AlO₂)₁₂(SiO₂)₁₂]·27 H₂O

Die Zeolithe können in einer Menge von beispielsweise 0, 1 bis 20, zweckmäßig 0, 1 bis 10 und insbesondere 0,1 bis 5 Gew.-Teilen, bezogen auf 100 Gew.-Teile PVC, angewendet werden.

Dawsonite können ebenfalls und in gleichen Mengen wie die Zeolithe dem PVC zugesetzt werden. Es handelt sich dabei um Alumocarbonate der Formel Na-(oder K- oder Li)[AL(OH)₂CO₃]·n H₂O

Bevorzugt sind Zusammnesetzungen enthaltend (a) PVC, (b) 0,1-50 Teile je 100 Teile PVC einer endständigen Epoxidverbindung, (c) 0,001-5,0 Teile je 100 Teile PVC eines Perchlorates, und (d) ein phenolisches Antioxidans, insbesondere 0,01-10,0 Teile je 100 Teile PVC.

Bevorzugt ist ferner mit (b), (c) und (d) stabilisiertes PVC, das zusätzlich Stoffe aus der Gruppe der Metallseifen, Weichmacher, Füllstoffe und Verstärkungsmittel. weiteren Antioxidantien Metallseifen und weiteren metallhaltigen Stabilisatoren, Polyole, Zeolithe, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

Bevorzugt ist ferner stabilisiertes PVC, das zusätzlich eine 1,3-Diketoverbindung, insbesondere 0,01-10 Teile je 100 Teile PVC, enthält.

Bevorzugt ist stabilisiertes PVC, das zusätzlich ein Polyol, z.B. einen Disaccharidalkohol, insbesondere 0,01-20 Teile je 100 Teile PVC, enthält.

Bevorzugt ist ferner stabilisiertes PVC, enthaltend zusätzlich eine oder mehrere Metallseifen, insbesondere Zinkseifen.

Bevorzugt ist ferner stabilisiertes PVC, enthaltend zusätzlich mindestens ein Additiv aus der Gruppe der Disaccharidalkohole, organischen Phosphite, Zeolithe, Hydrotalcite, Dawsonite, Aminocrotonate, Polyole, Diketone, Pyrrole, β-Naphthol oder Dihydropyridine.

Bevorzugt ist ferner stabilisiertes PVC, enthaltend zusätzlich mindestens ein Additiv aus der Gruppe der organischen Phosphite, Zeolithe, Dawsonite und Hydrotalcite.

Bevorzugt ist ferner stabilisiertes PVC, das zusätzlich einen Zeolith, insbesondere 0,1-20 Teile je 100 Teile PVC, enthält.

Bevorzugt ist ferner stabilisiertes PVC, das zusätzlich ein Hydrotalcit, insbesondere 0,1-20 Teile je 100 Teile PVC, enthält.

Bevorzugt ist ferner stabilisiertes PVC, das zusätzlich ein organisches Phosphit, insbesondere 0,01-5 Teile je 100 Teile PVC, enthält.

Bevorzugt ist ferner stabilisiertes PVC, das zusätzlich ein Dihydropyridin, insbesondere 0,01-5 Teile je 100 Teile PVC, enthält.

Bevorzugt ist ferner stabilisiertes PVC, das zusätzlich ein sterisch gehindertes Amin, insbesondere 0,01-5 Teile je 100 Teile PVC, enthält.

Ein weiterer Gegenstand der vorliegenden Erfindung ist die Verwendung eines Perchlorates in Kombination mit einer endständigen Epoxidverbindung und einem Antioxidans zur Stabilisierung von PVC. Für die einzelnen Stabilisatoren sowie das PVC selbst gelten die vorstehend erläuterten Bevorzugungen, ebenso kann zusätzlich einer der oben beschriebenen weiteren Bestandteile verwendet werden.

Das erfindungsgemäße stabilisierte PVC kann auf an sich bekannte Weise hergestellt werden, wozu man unter Verwendung an sich bekannter Vorrichtungen, wie Kalander, Mischer, Kneter, Extruder und dergleichen, die genannten Stabilisatoren und gegebenenfalls weitere Zusätze mit dem PVC vermischt. Hierbei können die Stabilisatoren einzeln oder in Mischung zugegeben werden oder auch in Form sogenannter Masterbatches. Die Erfindung betrifft somit auch ein Verfahren zur Herstellung von stabilisiertem PVC, dadurch gekennzeichnet, daß man unter Verwendung von Vorrichtungen, wie Kalander, Mischer, Kneter, Extruder und dergleichen, die Komponenten (b) (c) und (d) gemäß Anspruch 1 und gegegbenenfalls weitere Zusätze mit dem PVC vermischt.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte PVC kann auch zu Schaumstoffen verarbeitet werden.

Das erfindungsgemäße PVC eignet sich für Halbhart- und Weich-Rezepturen, insbesondere in Form von Weichrezepturen für Drahtummantelungen, Crash pad-Folien (Automobile), Kabelisolierungen, welche besonders bevorzugt ist. In Form von Halbhart-Rezepturen eignet sich das erfindungsgemäße PVC besonders für Dekorationsfolien, Schaumstoffe, Agrarfolien, Schläuche, Dichtungsprofile und Bürofolien.

In Form von Hart-Rezepturen eignet sich das erfindungsgemäß stabilisierte PVC besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Beispiele für die Anwendung des erfindungsgemäßen PVC als Plastisol sind Kunstleder, Fussböden, Textilbeschichtungen, Tapeten, Coil-Coatings und Unterbodenschutz für Kraftfahrzeuge.

Beispiele für Sinter-PVC-Anwendungen des erfindungsgemäß stabilisierten PVC sind Slush, Slush Mould und Coil-Coatings.

Die folgenden Beispiele erläutern die Erfindung weiter, ohne sie zu beschränken. Teile und Prozente beziehen sich, wie auch in der übrigen Beschreibung, auf das Gewicht, sofern nicht anders angegeben.

### Beispiele:

Eine PVC-Zusammensetzung wird durch Vermischen der einzelnen Komponenten gemäß nachfolgenden Tabellen hergestellt (Mengenangaben in Gew.-Teilen). Die Bestandteile werden während 5 Minuten auf einem Mischwalzwerk bei 170°C homogenisiert, so daß man einen 0,3-0,5 mm dicken Film erhält.

Die Bestimmung der Langzeitstabilität erfolgt durch einen statischen Hitztest ("start.H.") nach DIN 53381, wobei das Probestück bei 190°C in einem Testofen gelagert wird und die Zeit bis zur Schwärzung der Probe bestimmt wird.

Eine weitere Bestimmung der Langzeitstabilität ("VDE-Test") erfolgt durch die Ermittlung der thermischen Stabilität nach DIN VDE 0472. Das Probestück wird hierbei in ein unten zugeschmolzenes Glasrohr (AR-Glas der Firma Peco-Laborbedarf GmbH, Darmstadt) in einem Ölbad bei 200°C erwärmt und man bestimmt die Zeit bei der eine sichtbare Rotfärbung (entsprechend einem pH-Wert von 3) des pH-Universalindikatorpapieres beobachtet wird.

Eine weitere Bestimmung der Stabilität des PVC erfolgt durch den Dehydrochlorierungstest ("DHC-Test"), welcher in Anlehnung an DIN 53381, Bl. 3 durchgeführt wird. Hierbei wird bei der jeweils angegebenen Temperatur die Zeit bis zum Anstieg der Dehydrochlorierungskurve gemessen. Langzeit-Ofenlagerungstest
Es werden PVC Preßplatten der Maße 10x10x2 mm gefertigt. Diese werden dann in einem Ofen bei 100 +/- 0,5°C jeweils eine definierte Zeit (3, 7, 14 Tage) gelagert. Danach werden die Proben dem oben beschriebenen Dehydrochlorierungstest unterzogen.
Gegebenenfalls wird auch der Yellowness Index (YI) bestimmt.

Dauerwalztest.
Die PVC Mischung wird bei einer Temperatur von 180°C auf einem Walzwerk mit Spaltbreite 0,5mm gewalzt, und alle 5 Minuten wird eine Probe entnommen, deren Yellowness Index (**YI**) nach Erkalten gemessen wird.

**Tabelle I**

| **Dehydrochlorierungstest bei 200°C** | | | | | | |
|---|---|---|---|---|---|---|
| Mischung | **1** | **2** | **3** | **4** | **5** | **6** |
| PVC K-Wert 70 | 100 | 100 | 100 | 100 | 100 | 100 |
| LOXIOL G16¹⁾ | 0,6 | 0,6 | 0,6 | 0,6 | 0,6 | 0,6 |
| Wachs E²⁾ | 0,2 | 0,2 | 0,2 | 0,2 | 0,2 | 0,2 |
| NaClO₄ | 0,05 | 0,05 | 0,05 | 0,05 | 0,05 | 0,05 |
| IRGANOX 1010³⁾ | 0,5 | 0,5 | 0,5 | | | |
| IRGANOX 1076⁴⁾ | | | | 0,5 | 0,5 | 0,5 |
| epox. Soja-Öl | 3,0 | | | 3,0 | | |
| Araldit GY 250⁵⁾ | | 3,0 | | | 3,0 | |
| Araldit GY 285⁶⁾ | | | 3,0 | | | 3,0 |
| **Minuten** | **26** | **49** | **48** | **26** | **49** | **50** |

| | | | | | | |
|---|---|---|---|---|---|---|
| ¹⁾Glycerin partialester | | | | | | |
| ²⁾Esterwachs | | | | | | |
| ³⁾Pentaerythrityl-tetrakis-3-(3,5-Di-tert-butyl-4-hydroxyphenyl)propional | | | | | | |
| ⁴⁾Octadecyl-3-(3,5-di-tert-butyl-4-hydroxyphenyl)propional | | | | | | |
| ⁵⁾Bisphenol-A-diglycidylether (Araldit® GY 250) | | | | | | |
| ⁶⁾Bisphenol-F-diglycidylether (Araidil® GY 285) | | | | | | |

Es zeigt sich, daß die erfindungsgemäße Stabilisierung mit Epoxid, Perchlorat und Antioxidans (Mischungen 2, 3, 5, 6) derjenigen mit epoxidiertem Sojabohnenöl, Perchlorat und Antioxidans (Mischungen 1, 4) weit überlegen ist.

**Tabelle III**

| **Statischer Hitzetest** | | |
|---|---|---|
| Mischung | **7** | **8** |
| PVC K-Wert 70 | 100 | 100 |
| LOXIOL G16¹⁾ | 0,6 | 0,6 |
| Wachs ²⁾E | 0,2 | 0,2 |
| IRGAMOD F131⁷⁾ | 1,5 | 1,5 |
| Zinkstearat | 0,05 | 0,05 |
| Rhodiastab 50⁸⁾ | 0,2 | 0,2 |
| | | |
| NaClO₄ | 0,05 | 0,05 |
| Bisphenol A | 0,5 | 0,5 |
| epox. Soja-Öl | 3,0 | |
| Araldit GY 250⁵⁾ | | 3,0 |
| Araldit PT 810¹⁵⁾ | | |
| **Minuten** | **16** | **85** |
| Gegenüber epoxidiertem Sojabohnenöl zeigt sich auch im statischen Hitzetest der Vorteil der erfindungsgemäßen, epoxidhaltigen Zusammensetzung 8. | | |

| | | |
|---|---|---|
| ¹⁾Glycerinpartialester | | |
| ²⁾Esterwachs | | |
| ⁵⁾Bisphenol-A-diglycidylether (Araldit® GY 250) | | |
| ⁷⁾Acrylatpolymer als Verarbeitungshilfe | | |
| ⁸⁾Stearoylbenzoylmethan | | |

**Tabelle IV**

| **VDE-Test bei 200°C** | | | | |
|---|---|---|---|---|
| Mischung | **9** | **10** | **11** | **12** |
| PVC K-Wert 70 | 100 | 100 | 100 | 100 |
| DIDP¹³⁾-Weichmacher | 49 | 49 | 49 | 49 |
| | | | | |
| Kreide | 50 | 50 | 50 | 50 |
| | | | | |
| NaClO₄ | 0,05 | 0,05 | 0,05 | 0,05 |
| Araldit GY 282³⁾ | 5 | 5 | 5 | 5 |
| | | | | |
| Zn-Stearat | 0,6 | 0,6 | 0,6 | 0,6 |
| Maltitol | 0,5 | 0,5 | 0,5 | 0,5 |
| BisphenolA | 0,5 | 0,5 | 0,5 | 0,5 |
| β-Diketon¹⁴⁾ | 0,3 | 0,3 | 0,3 | 0,3 |
| Wessalith P¹⁰⁾ | 1,00 | | | |
| m-OH-DPA⁹⁾ | | 0,3 | | |
| Pyrrol | | | 0,3 | |
| β-Naphthol | | | | 0,3 |
| | | | | |
| **Minuten** | **202** | **206** | **200** | **205** |

| | | | | |
|---|---|---|---|---|
| ³⁾Bisphenol-F-diglycidylether (Araldit® GY 282) | | | | |
| ⁹⁾m-Hydroxydiphenylamin | | | | |
| ¹⁰⁾4A-Zeolith der Firma Degussa | | | | |
| ¹³⁾Di-iso-dodecylphthalat, | | | | |
| ¹⁴⁾Stearoylbenzoylmethan, Dibenzoylmethan | | | | |

Durch die Verwendung zusätzlicher Stoffe kann ein weiterer Stabilitätsgewinn erzielt werden.

**Tabelle V**

| **Dehydrochlorierungstest bei 200°C** | | | |
|---|---|---|---|
| Mischung | **13** | **14** | **15** |
| | | | |
| PVC K-Wert 70 | 100 | 100 | 100 |
| | | | |
| DIDP¹⁾-Weichmacher | 50 | 50 | 50 |
| | | | |
| NaClO₄ | 0,05 | 0,05 | 0,05 |
| Araldit GY 250⁵⁾ | 3 | 3 | 3 |
| | | | |
| BisphenolA | 0,5 | | |
| Irganox 1076⁴⁾ | | 0,5 | |
| Irganox 1010³⁾ | | | 0,5 |
| | | | |
| **Minuten** | **43** | **51** | **52** |

| | | | |
|---|---|---|---|
| ¹⁾Di-iso-dodecylphthalat, | | | |
| ³⁾Pentaerythrityl-tetrakis-3-(3,5-Di-tert-butyl-4-hydroxyphenyl)propionat | | | |
| ⁴⁾Octadccyl-3-(3,5-di-tert-butyl-4-hydroxyphenyl)propionat | | | |
| ⁵⁾Bisphenol-A-diglycidylether (Araldit® GY 250) | | | |

Hier ist die Anwendung in Weich-PVC-Zusammensetzungen dargestellt.

**Tabelle VI**

| **Yellowness Index Preßplatte** | | | | |
|---|---|---|---|---|
| Mischung | **16** | **17** | **18** | **18** |
| | | | | |
| PVC K-Wert 70 | 100 | 100 | 100 | 100 |
| LOXIOL G16¹⁾ | 1 | 1 | 1 | 1 |
| Wachs E²⁾ | 0,2 | 0,2 | 0,2 | 0,2 |
| IRGAMOD F131⁷⁾ | 1,5 | 1,5 | 1,5 | 1,5 |
| Zinkstearat | 0,05 | 0,05 | 0,05 | 0,05 |
| Rhodiastab50⁸⁾ | 0,2 | 0,2 | 0,2 | 0,2 |
| | | | | |
| NaClO₄ | 0,05 | 0,05 | 0,05 | 0,05 |
| Bisphenol A | | | 0,5 | 0,5 |
| epox. Soja-Öl | 3,0 | | 3,0 | |
| Araldit GY 250⁵⁾ | | 3,0 | | 3,0 |
| **YI** | **79** | **24** | **82** | **21** |

| | | | | |
|---|---|---|---|---|
| ¹⁾Glycerinpartialester | | | | |
| ²⁾Esterwachs | | | | |
| ⁵⁾Bisphenol-A-diglycidylether (Araldit® GY 250) | | | | |
| ⁷⁾Acrylatpolymer als Verarbeitungshilfe | | | | |
| ⁸⁾Stearoylbenzoylmethan ¹⁵⁾ festes heterocyclisches Epoxidharz (Triglycidylisocyanurat) | | | | |

Die erfindungsgemäßen Mischungen 17 und 19 sind wesentlich weniger vergilbt als die epoxidiertes Sojabohnenöl enthaltenden Vergleichsmischungen.

**Tabelle VII**

| **Statischer Hitzetest bei 190°C** | | | |
|---|---|---|---|
| Mischung | **20** | **21** | **22** |
| | | | |
| PVC K-Wert 60 | 100 | 100 | 100 |
| PMMA¹⁶⁾ | 1 | 1 | 1 |
| PMMA/Acrylat¹⁷⁾ | 0,5 | 0,5 | 0,5 |
| Wachs E¹⁸⁾ | 0,5 | 0,5 | 0,5 |
| Loxiol G13¹⁹⁾ | 0,5 | 0,5 | 0,5 |
| Loxiol G40²⁰⁾ | 0,4 | 0,4 | 0,4 |
| Reoplast 39²¹⁾ | 0,5 | 0,5 | 0,5 |
| Irgastab T634²²⁾ | 2,5 | | |
| NaClO₄ | | 0,05 | 0,05 |
| Zinkstearat | | 0,05 | 0,05 |
| Araldit GY 250²⁾ | | 3 | 3 |
| β-Diketon⁴⁾ | | 0,2 | 0,2 |
| Bisphenol A | | 0,5 | |
| Irganox 1010⁸⁾ | | | 0,5 |
| | | | |
| **Minuten** | **60** | **67** | **83** |

| | | | |
|---|---|---|---|
| ⁴⁾Stearoylbenzoylmethan, Dibenzoylmethan | | | |
| ⁸⁾Pentaerythrityl-tetrakis-3-(3,5-Di-tert-butyl-4-hydroxyphenyl)propionat | | | |
| ¹⁶⁾Polymethylmetacrylat-Verarbeitungshilfe | | | |
| ¹⁷⁾Polymethylmetacrylat/Acrylat-Verarbeitungshilfe | | | |
| ¹⁸⁾Esterwachs | | | |
| ¹⁹⁾Gleitmittel | | | |
| ²⁰⁾Gleitmittel | | | |
| ²¹⁾Epoxidiertes Sojabohnenöl | | | |
| ²²⁾Zinnstabilisator | | | |

Es zeigt sich die überlegene Stabilisatorwirkung mit Perchlorat, Epoxid und Antioxidans(Mischung 22).

**Tabelle VIII**

| **Statischer Hitzetest bei 190°C** | | | | |
|---|---|---|---|---|
| Mischung | 23 | 24 | 25 | 26 |
| PVC K-Wert 82 | 100 | 100 | 100 | 100 |
| Kreide | 6 | 6 | 6 | 6 |
| Kronos 2220²³⁾ | 4 | 4 | 4 | 4 |
| Irgastab CH 302²⁴⁾ | 0,4 | 0,4 | 0,4 | 0,4 |
| IRGAMOD F131⁷⁾ | 1 | 1 | 1 | 1 |
| IRGAWAX 351²⁵⁾ | 0,5 | 0,5 | 0,5 | 0,5 |
| Gleitmittel | 0,5 | 0,5 | 0,5 | 0,5 |
| CZ 2000²⁶⁾ | 3 | | | |
| NaClO₄ | | 0,05 | 0,05 | 0,05 |
| Zinkstearat | | 0,5 | 0,5 | 0,5 |
| Araldit GY 250⁵⁾ | | 3 | 3 | 3 |
| β-Diketon⁴⁾ | | 0,2 | 0,2 | 0,2 |
| Bisphenol A | | 0,5 | | |
| Irganox 1010⁸⁾ | | | 0,5 | 0,5 |
| Poylol (THEIC)²⁷⁾ | | | | 0,3 |
| | | | | |
| **Minuten** | **52** | **56** | **62** | **65** |

| | | | | |
|---|---|---|---|---|
| ⁵⁾Bisphenol-A-diglycidylether (Araldit® GY 250) | | | | |
| ⁷⁾Acrylatpolymer als Verarbeitungshilfe | | | | |
| ²³⁾Titandioxid | | | | |
| ²⁴⁾Phosphitstabilisator | | | | |
| ²⁵⁾Paraffinwachs | | | | |
| ²⁶⁾Calcium-Zink-Stabilisator | | | | |
| ⁴⁾Stearoylbenzoylmethan, Dibenzoylmethan | | | | |
| ⁸⁾Pentaerythrityl-tetrakis-3-(3,5-Di-tert-butyl-4-hydroxyphenyl)propionat | | | | |

Es zeigt sich die überlegene Stabilisatorwirkung mit Perchlorat, Epoxid und Antioxidans. Der Zusatz von Polyol wirkt sich besonders günstig aus.

## Patentansprüche

1. Zusammensetzung enthaltend
(a) PVC,
(b) 0,001 - 5,0 Teile je 100 Teile PVC Perchlorat der Formel M(ClO₄)ₙ, wobei M H, NH₄, Na, K, Mg, Ca, Ba oder Al und n 1, 2 oder 3 je nach Wertigkeit von M ist,
(c) 0,1 - 50 Teile je 100 Teile PVC einer Epoxidverbindung enthaltend einen endständigen Epoxidrest der Formel 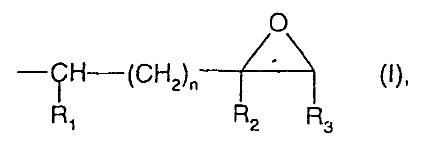 wobei
R₁ und R₃ Wasserstoff sind,
R₂ Wasserstoff oder Methyl und n gleich 0 ist, oder
R₁ und R₃ zusammen -CH₂-CH₂- oder -CH₂-CH₂-CH₂- und R₂ Wasserstoff sind und n 0 oder 1 ist und dieser Rest (i) direkt an ein Sauerstoffatom gebunden ist, und wobei Komponente (c) ein flüssiger Bisphenol-A-diglycidylether, flüssiger Bisphenol-F-diglycidylether, flüssiger Polyglycidylether von Phenolformaldehyd, flüssiger Polyglycidylether von o-Cresolformaldehyd, flüssiger Glycidylether von Alkohol, oder flüssiger Glycidylether von Carbonsäuren ist, und
(d) 0,01 - 10,0 Teile je 100 Teile PVC eines phenolischen Antioxidans.

2. Zusammensetzung gemäss Anspruch 1, enthaltend als Komponente (c) eine Epoxyverbindung, die eine aromatische Gruppe enthält, insbesondere ein Bisphenolderivat.

3. Zusammensetzung gemäß Anspruch 2, enthaltend als Komponente (c) ein Diglycidylether auf Basis von 2,2-Bis (4-hydroxyphenyl)propan, Bis(4-hydroxyphenyl)methan oder einer Mischung von Bis(ortho/parahydcoxyphenyl) methan.

4. Zusammensetzung gemäß Anspruch 1, worin M Na oder K ist.

5. Zusammensetzung gemäß Anspruch 1, enthaltend zusätzlich Stoffe ausgewählt aus der Gruppe der Metallseilen, Weichmacher, Füllstoffe und Verstärkungsmittel, weiteren Antioxidantien, Polyole, Zeolithe, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

6. Zusammensetzung gemäß Anspruch 1, enthaltend zusätzlich einen Füllstoff.

7. Zusammensetzung gemäß Anspruch 1, enthaltend zusätzlich eine oder mehrere Metallseifen.

8. Zusammensetzung gemäß Anspruch 1, enthaltend zusätzlich mindestens ein Additiv aus der Gruppe der Disaccharidalkohole, der metallfreien Stabilisatoren, Phosphile, Zeolithe, Hydrotalcite, Aminocrotonate, Polyole, Dawsonite, Diketone oder Dihydropyridine.

9. Zusammensetzung gemäß Anspruch 1, enthaltend zusätzlich mindestens ein Additiv aus der Gruppe der organischen Phosphite, Zeolithe, Dawsonite und Hydrolalcite.

10. Verwendung eines Perchlorates (b) in Kombination mit einer endstandigen Epoxidverbindung (c) und einem Antioxidants (d) gemäss Anspruch 1 zum Stabilisieren von PVC

11. Verfahren zur Herstellung von stabilisiertem PVC, **dadurch gekennzeichnet, daß** man unter Verwendung von Vorrichtungen, wie Kalander, Mischer, Kneter. Extruder und dergleichen die Komponenten (b) (c) und (d) gemäß Anspruch 1 und gegebenenfalls weitere Zusätze mit dem PVC vermischt

12. Verwendung des stabilisierten PVC gemäß Anspruch 1 zur Herstellung von aus PVC herstellbaren Formkörpern.

13. Verwendung gemäß Anspruch 12 zur Herstellung von Drahtummantelungen, Kabelisolierungen, Dekorationsfolien, Schaumstoffen, Agrarfolien, Schläuchen, Dichtungsprofilen, Bürofolien, Hohlkörpern, Verpackungsfolien Blasfolien, Crash pad-Folien, Rohren, Schaumstoffen, Schwerprofilen Lichtwandprofilen, Bauprofilen, Sidings, Fittings, Bürofolien und Apparate-Gehäusen.

## Claims

1. A composition comprising
(a) PVC,
(b) 0.001-5.0 parts, per 100 parts of PVC, of perchlorate of the formula M(ClO₄)ₙ, where M is H, NH₄, Na, K, Mg, Ca, Ba or Al, and n is 1, 2 or 3, depending on the valency of M,
(c) 0.1-50 parts, per 100 parts of PVC, of an epoxide compound containing a terminal epoxide radical, of the formula 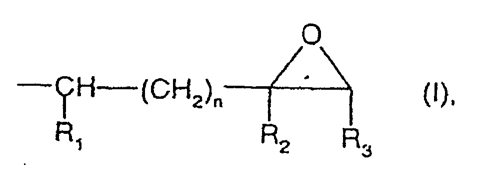 where
R₁ and R₃ are hydrogen,
R₂ is hydrogen or methyl and n is 0, or
R₁ and R₃ together are -CH₂-CH₂- or -CH₂-CH₂-CH₂-, and R₂ is hydrogen and n is 0 or 1 and this radical (i) is bonded directly to an oxygen atom, component (c) being a liquid bisphenol A diglycidyl ether, a liquid bisphenol F diglycidyl ether, a liquid polyglycidyl ether of phenolformaldehyde, a liquid polyglycidyl ether of o-cresol-formaldehyde, a liquid glycidyl ether of alcohol or a liquid glycidyl ether of carboxylic acids, and
(d) 0.01-10.0 parts, per 100 parts of PVC, of a phenolic antioxidant.

2. A composition according to claim 1, wherein component (c) is an epoxy compound containing an aromatic group, in particular a bisphenol derivative.

3. A composition according to claim 2, wherein component (c) is a diglycidyl ether based on 2,2-bis(4-hydroxyphenyl)propane, bis(4-hydroxyphenyl)-methane or a mixture of bis(ortho/parahydroxyphenyl)methane.

4. A composition according to claim 1, wherein M is Na or K.

5. A composition according to claim 1, additionally comprising substances selected from the group consisting of metal soaps, plasticizers, fillers and reinforcing materials, other antioxidants, polyols, zeolites, hydrotalcites, dawsonites, organic phosphites, 1,3-diketo compounds, dihydropyridines, sterically hindered amines (HALS), light stabilizers, UV absorbers, lubricants, fatty acid esters, paraffins, blowing agents, optical brighteners, pigments, flameproofing agents, antistatics, β-aminocrotonates, pyrroles, naphthols, hydroxydiphenylamines, phenylindoles, phosphates, thiophosphates, gelling aids, peroxide-destroying compounds, modifiers and other complexing agents for Lewis acids.

6. A composition according to claim 1, additionally comprising a filler.

7. A composition according to claim 1, additionally comprising one or more metal soaps.

8. A composition according to claim 1, additionally comprising at least one additive from the group consisting of disaccharide alcohols, metal-free stabilizers, phosphites, zeolites, hydrotalcites, aminocrotonates, polyols, dawsonites, diketones or dihydropyridines.

9. A composition according to claim 1, additionally comprising at least one additive from the group consisting of organic phosphites, zeolites, dawsonites and hydrotalcites.

10. The use of a perchlorate (b) in combination with a terminal epoxide compound (c) and an antioxidant (d) according to claim 1 for stabilizing PVC.

11. A process for the preparation of stabilized PVC, which comprises mixing components (b) (c) and (d) of claim 1 and, if desired, further additives with the PVC using equipment such as calenders, mixers, compounders, extruders and the like.

12. The use of stabilized PVC according to claim 1 for the production of mouldings which can be produced from PVC.

13. The use according to claim 12 for the production of wire sheaths, cable insulation, decoration sheeting, foams, agricultural sheeting, tubes, sealing profiles, office films, hollow articles, packaging films, blown films, crash pad films, tubes, foams, heavy profiles light-wall profiles, building profiles, sidings, fittings, office films and equipment housings.

## Revendications

1. Composition contenant
(a) du PVC;
(b) 0,001-5,0 parties de perchlorate de formule M(ClO₄)ₙ pour chaque fois 100 parties de PVC, dans laquelle M est H, NH₄, Na, K, Mg, Ca, Ba ou Al et n est 1, 2 ou 3 selon la valence de M;
(c) 0,1-50 parties d'un composé époxydé contenant un radical époxyde en fin de chaîne de formule I, pour chaque fois 100 parties de PVC 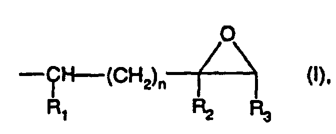 dans laquelle
R₁ et R₃ sont hydrogène,
R₂ est hydrogène ou méthyle et n est égal à zéro, ou
R₁ et R₃ sont ensemble -CH₂-CH₂- ou -CH₂-CH₂-CH₂- et R₂ est hydrogène et n est 0 ou 1, et ce radical (I) est directement lié à un atome d'oxygène, le composant (c) étant un bisphénol-A-diglycidyléther liquide, un bisphénol-F-diglycidyléther liquide, un polyglycidyléther de phénolformaldéhyde liquide, un polyglycidyléther de o-crésolformaldéhyde liquide, un glycidyléther d'alcools liquide, un glycidyléther d'acides carboxyliques liquide, et
(d) 0,01-10,0 parties d'un antioxydant phénolique pour chaque fois 100 parties de PVC.

2. Composition suivant la revendication 1, contenant comme composant (c) un composé époxydé qui contient un groupement aromatique, en particulier un dérivé de bisphénol.

3. Composition suivant la revendication 2, contenant comme composant (c) un éther de diglycidyle à base de 2,2-bis(4-hydroxyphényl)propane, de bis(4-hydroxyphényl)méthane ou d'un mélange de bis(ortho/parahydroxyphényl)méthane.

4. Composition suivant la revendication 1, dans laquelle M est Na ou K.

5. Composition suivant la revendication 1, contenant en outre des substances choisies parmi le groupe des savons métalliques, des plastifiants, des charges et des agents de renforcement, d'autres antioxydants, des polyols, des zéolithes, des hydrotalcites, des dawsonites, des phosphites organiques, des composés 1,3-dicéto, des dihydropyridines, des amines stériquement encombrées (HALS), des agents de protection vis-à-vis de la lumière, des absorbeurs d'UV, des lubrifiants, des esters d'acide gras, des paraffines, des agents moussants, des azurants optiques, des pigments, des agents antiflamme, des antistatiques, des β-aminocrotonates, des pyrroles, des naphthols, des hydroxydiphénylamines, des phénylindoles, des phosphates, des thiophosphates, des auxiliaires de gélification, des composés destructeurs de peroxyde, des modificateurs et d'autres agents complexants pour acides de Lewis.

6. Composition suivant la revendication 1, contenant en outre une charge.

7. Composition suivant la revendication 1, contenant en outre un ou plusieurs savons métalliques.

8. Composition suivant la revendication 1, contenant en outre au moins un additif du groupe des alcools de disaccharide, des stabilisants exempts de métal, des phosphites, des zéolithes, des hydrotalcites, des aminocrotonates, des polyols, des dawsonites, des dicétones ou des dihydropyridines.

9. Composition suivant la revendication 1, contenant en outre au moins un additif du groupe des phosphites organiques, des zéolithes, des dawsonites et des hydrotalcites.

10. Utilisation d'un perchlorate (b) en combinaison avec un composé époxydé en fin de chaîne (c) et un antioxydant (d) suivant la revendication 1 pour la stabilisation de PVC.

11. Procédé de préparation de PVC stabilisé, **caractérisé en ce qu'**on mélange avec le PVC les composants (b), (c) et (d) suivant la revendication 1 et le cas échéant d'autres additifs, en utilisant des appareils comme une calandre, un mélangeur, un malaxeur, une extrudeuse et des appareils semblables.

12. Utilisation du PVC stabilisé suivant la revendication 1 pour la préparation de corps moulés pouvant être fabriqués à partir de PVC.

13. Utilisation suivant la revendication 12, pour la fabrication de gaines de fils, d'isolations pour câbles, de feuilles de décoration, de matières moussantes, de feuilles pour l'agriculture, de tuyaux, de profils d'étanchéité, de feuilles pour bureau, de corps creux, de feuilles d'emballage, de feuilles soufflées, de feuilles pour tableaux de bord, de tubes, de matières moussantes, de profils lourds, de profils de parois lumineuses, de profils de construction, de bardages, des raccords, de feuilles pour bureau et de boîtiers pour appareils.
